# EUROPEAN PATENT SPECIFICATION

(11) **EP 0 643 556 B1**
(45) Date of publication and mention of the grant of the patent: **12.04.2000**
(21) Application number: 93912420.2
(22) Date of filing: 04.06.1993
(51) Int. Cl.: A01N 25/18, A01N 25/04, A01N 25/10, A01N 59/26, C01B 25/06, A01M 13/00

(54) **FORMULATIONS, METHOD AND APPARATUS FOR THE CONTROLLED GENERATION OF PHOSPHINE**
FORMULIERUNGEN, VERFAHREN UND GERÄT FÜR DIE KONTROLLIERTE HERSTELLUNG VON PHOSPHIN
FORMULATIONS, PROCEDE ET APPAREIL DE PRODUCTION REGULEE DE PHOSPHINE

(30) Priority: 05.06.1992 AU PL283092; 16.11.1992 AU PL582192
(43) Date of publication of application: 22.03.1995
(73) Proprietor: COMMONWEALTH SCIENTIFIC AND INDUSTRIAL RESEARCH ORGANISATION, Campbell, ACT 2612 (AU)
(72) Inventor: WATERFORD, Colin Joseph, McGregor, ACT 2615 (AU); WHITTLE, Christopher Playford, Pearce, ACT 2607 (AU); WINKS, Robert Gordon, Isaacs, ACT 2607 (AU)
(74) Representative: Woods, Geoffrey Corlett
(86) International application number: AU9300270
(87) International publication number: WO9325075

(56) References cited:
- DE-C- 880 817
- FR-A- 750 035
- GB-A- 333 216
- US-A- 4 863 718
- US-A- 5 015 475

## Description

### Technical Field

This invention concerns the controlled production of phosphine. More particularly, it concerns formulations for use in the generation of phosphine, and phosphine generators using such formulations. Such generators are particularly suited for use in the fumigation of grain and similar products stored in bulk, but the phosphine generating method and apparatus of the present invention are not limited to that purpose.

### Background to the Invention

Phosphine (PH₃) is a preferred gaseous fumigant for stored grain and similar particulate foodstuffs because any residue of the fumigant will be lost or oxidised to a harmless phosphate when the grain or other foodstuff is processed to produce a food. Recent examples of the fumigation of grain with phosphine are described in the specification of International patent application No PCT/AU90/00268 (which is WIPO Publication No WO 91/00017).

The phosphine used to fumigate a grain silo or other storage may be supplied by cylinders which contain phosphine or (more usually) a mixture of phosphine and carbon dioxide. Alternatively, the phosphine may be produced by on-site generators in which phosphine is produced by the reaction of water or water vapour with a metal phosphide (typically aluminium phosphide or magnesium phosphide). However, the more traditional technique for disinfacting a grain silo or the like with phosphine involves the use of a probe to position formulations of aluminium phosphide or magnesium phosphide within the grain mass, where moisture in the air circulating through the grain reacts with the phosphide to generate phosphine. A modification of this technique involves the placement of pellets of a metallic phosphide in the head space of a grain silo. The phosphine produced when the phosphide reacts with moisture in the atmosphere above the grain is circulated through the stored grain either by the natural convection currents that are present in the silo or by active recirculation of air from the head space through the grain using recirculation ducts. Examples of this approach are described in the specifications of US patents Nos 4,200,657 (to J S Cook) and 4,756,117 (to W Friemel). Such techniques, however, cannot be guaranteed to supply phosphine to all regions of the bulk stored grain to eradicate weevils and other unwanted grain pests. In addition, when these traditional techniques are used, there is no control over the concentration of phosphine in the grain after the phosphide formulation has been added, and there is no possibility of regulating the phosphine concentration/time regime in the bulk storage to be most effective.

When using phosphine from cylinders which contain this gas (they usually contain 3 per cent phosphine and 97 per cent carbon dioxide), the phosphine should be mixed with air externally of the stored grain and the resultant gas mixture should then be pumped through the grain. This method of disinfestation of the grain should be carried out periodically, or whenever it is perceived that fumigation of the grain is necessary or desirable. Although this approach to the fumigation of grain is regarded as the most efficient, its major disadvantage is the need to guarantee the provision of expensive cylinders of the gas mixture to the treatment site.

There is one significant problem with the use of phosphine. When its concentration in air reaches certain values, the gas mixture is flammable and potentially explosive. The generally accepted maximum safe concentration of phosphine in air at standard temperature and pressure is 1.79 per cent by volume. The paper entitled "The Flammability Limit of Pure Phosphine-Air Mixtures at Atmospheric Pressure", by A R Green et al, which was published in "Controlled atmosphere and fumigation in grain storages" (Edited by B E Ripp et al), Amsterdam, Elsevier, 1983, pages 433-449, confirms this safe concentration limit and provides further information about the flammability of phosphine.

Other potential problems with the use of phosphine are the toxicity of phosphine to mammals when the phosphine is present in high concentrations, and the exothermic nature of the hydrolysis reaction which produces the phosphine.

Thus the use of on-site phosphine generators, such as the generator described in European Patent Publication No A-0318040 (the specification of European patent application No 88119701.6), presents a number of hazards to the user. In addition, with the fumigation regimes now being employed (for example, maintaining low phosphine concentrations for long periods), it is possible that the on-site phosphine generators may be left unattended for a considerable time. This is particularly likely to be the situation when the phosphine generator is used in connection with the fumigation of storages at remote locations. Thus on-site phosphine generators, with their attendant fire or explosion risk, have been unattractive for long term fumigation operations.

Clearly it would be advantageous to have a method of generating phosphine in a controlled and safe manner at the treatment site, preferably using the readily available commercial phosphide formulations or similar light and easily handled feedstock.

It is an objective of the present invention to provide formulations of a reactive phosphide, such as aluminium phosphide, which are inherently safe for transportation and which can be added to water in a controlled manner, or over which moist air can be passed, so that phosphine is generated in a controlled manner. In achieving this objective, the present invention provides an alternative to the phosphine generation systems (which use either phosphides in powder form positioned within a chamber closed by a membrane which is porous to moisture and phosphine, or the periodic dropping of pellets of phosphide into a water bath) which are described in the specification of International patent application No PCT/AU91/00264 (which is WIPO publication No WO 91/19671).

The present invention achieves this objective by providing a paste or thick slurry of a particulate phosphide and a water-immiscible compound. The water-immiscible compound may be a non-volatile oil (for example, paraffin oil), a low melting point wax, a mixture of such compounds, or a similar compound (which may include petroleum jelly as a component) which is inert with respect to the phosphide and which forms a paste or the like with a phosphide powder so that the phosphide is effectively kept out of contact with moisture (which is usually present in air). When the paste is placed in a water bath, or in a moist air flow, the protective covering of the phosphide particles (which may be pellets) is dispersed. Water, in liquid or vapour form, then comes into contact with the phosphide, and reacts with it to form phosphine and a hydroxide.

Thus, according to a first aspect of the present invention, there is provided a phosphide formulation for use in the controlled production of phosphine, the formulation comprising an intimate mixture of
(a) a particulate phosphide which reacts with water to form phosphine; and
(b) a water-immiscible compound which is inert with respect to the phosphide, said water-immiscible compound being selected from the group consisting of (i) a non-volatile oil, (ii) a low melting point wax, (iii) a mixture of a non-volatile oil with either petroleum jelly or a low melting point wax, and (iv) a mixture of a non-volatile oil, petroleum jelly and a low melting point wax;
   said mixture having a consistency, at the temperature of use of the mixture, of an extrudable paste or thick slurry.

Preferably the phosphide is aluminium phosphide. Normally, to form an extrudable paste, the particulate phosphide will be in the form of a fine powder, but (as noted above) pellets of phosphide may be used to form a thick slurry formulation in accordance with this aspect of the invention.

If the water-immiscible compound is a wax which melts at a temperature a little above ambient temperature, the formulation will be a solid at ambient temperatures. This formulation is particularly suitable for transportation because the phosphide in the formulation is unaffected by moisture which may come into contact with it in the normal course of handling. However, such a formulation has to be heated to soften it prior to its dispersion into a water bath, and the water bath has to be heated to a temperature which is high enough to prevent re-solidification of the formulation, and to ensure that the wax separates from the solid phosphide particles so that they come into contact with the water.

A surfactant, frothicant, wetting agent, or other compound which assists in the dispersal of the water-immiscible compound in a water bath or moist air flow, but which is inert with respect to the phosphide component of the formulation, may be included in the formulation.

Also in accordance with the present invention, there is provided a method of generating phosphine in a controlled manner which comprises causing a small quantity of a phosphide formulation, in accordance with the first aspect of the present invention, to be introduced periodically into a water bath, whereby water in the water bath removes the water-immiscible compound from the formulation so that the phosphide particles are contacted by the water of the water bath, and react with the water of the water bath to produce phosphine.

The present invention also encompasses phosphine generators in which a formulation as described above is controllably discharged from a container into a water bath, using a pump, screw feed (auger feed), or other suitable means.

Thus, in accordance with another aspect of the present invention, there is provided apparatus for the controlled production of phosphine, said apparatus comprising
(a) a reaction chamber adapted to contain water, said reaction chamber having a gas inlet port and a gas outlet port, the gas outlet port being above the normal level of water in the chamber;
(b) a container adapted to contain a phosphide formulation as defined above, the interior of the container being connected to the reaction chamber via a small aperture or nozzle; and
(c) formulation transfer means operatively associated with the container for causing a formulation within the container to be transferred at a controlled rate through the aperture or nozzle and into the reaction chamber, where the transferred formulation contacts the water in the reaction chamber, and the water removes the water-immiscible compound from the transferred formulation, thereby exposing the phosphide particles in the transferred formulation to the water, which reacts with the phosphide particles to produce phosphine.

A variety of constructions of such phosphine generators are possible but, as will be seen later in this specification, such phosphine generators usually require an electric motor to drive a paste injector and a stirrer. However, in some circumstances, when the phosphine generating equipment is to be used without constant supervision (particularly in remote locations), it is preferable for the generator to have the minimum number of components that may require attention. Also, some fumigation enclosures may not be large enough to justify the cost of phosphine generating equipment that uses additional electric motors for stirrers and for paste or slurry injectors.

Accordingly, a modified form of the present invention provides a packaged phosphine formulation, with which phosphine can be generated in a controlled manner without the need for power-driven formulation injectors and stirrers. In this modified form of the present invention, the phosphide formulation is contained in a sealed package (to permit safe transportation and storage of the formulation). When the formulation is to be used to generate phosphine, the sealed package is opened or partially opened to expose the formulation to moist air or to another carrier gas which contains moisture. The water in the air or carrier gas then reacts with the formulation to produce phosphine. Using this technique, the phosphine is produced in a predictable manner, the rate of phosphine production being controlled by regulating the exposed surface of the formulation, the composition of the formulation, and the water content of the air or other carrier gas.

Such a "formulation package" can be included in existing ducting to a grain silo or other fumigation enclosure. Alternatively, it can be the basis of a simple (but effective) phosphine generator, the output of which is fed into the existing ducting to a grain silo or other enclosure. Another way of using the packaged formulation is to place it in a fumigation enclosure, so that moisture in the air within the enclosure can react with the phosphide in the formulation to generate phosphine.

Thus, according to another aspect of the present invention, there is provided a phosphide formulation in accordance with the first aspect of the present invention, said formulation being packaged within a moisture-impervious container, said container having at least one aperture therein, the (or each) aperture being closed by a moisture-impervious closure member, the (or each) closure member being removable to expose the formulation packed in the container.

Further according to the present invention, there is provided a method of generating phosphine which comprises the steps of
(a) placing a packaged phosphide formulation, as defined above, within a duct, chamber or the like through which a gas can flow, the removable region (or one of the removable regions) of the container being subsequently or previously removed from the container in which the formulation is packed; and
(b) causing a moisture-containing carrier gas to flow through said duct, chamber or the like and past the exposed phosphide formulation, whereby the water in the carrier gas reacts with the phosphide in the formulation to form phosphine, which is incorporated into the carrier gas.

The present invention further encompasses apparatus for effecting the method defined in the last preceding paragraph.

Still further in accordance with the present invention, a method of generating phosphine in a fumigation enclosure comprises placing a packaged phosphide formulation (as defined above) in the enclosure, with the (or at least one) removable region of the container removed, to thereby expose the phosphide formulation to the air or other gas within the enclosure, whereby moisture in the air or other gas reacts with the phosphide in the formulation to form phosphine, which permeates throughout the enclosure.

Examples of the formulations of the present invention and their properties, and embodiments of the methods and apparatus of the present invention, will now be described, by way of example, with reference to the accompanying drawings.

### Brief Description of the Drawings

Figure 1 is a graph showing the cumulative volume of phosphine produced in a period of 30 minutes by samples of phosphide formulations which have been placed in water which is not stirred.
Figure 2 is an extension of the graph of Figure 1, showing the change in phosphine production when the water is stirred, 30 minutes after immersion of the phosphide formulations.
Figure 3 shows the variation of phosphine production when identical samples of a phosphide formulation are immersed in water at different temperatures.
Figure 4 presents data which illustrates the inherent safety of the formulations of the present invention.
Figure 5 is a schematic diagram of a phosphine generator which uses the formulations of the present invention and which is connected to a fumigation system for a grain silo.
Figure 6 shows the phosphine output that was obtained when one sample of the formulation of the present invention was used in a prototype generator, similar to the generator illustrated in Figure 5.
Figure 7 is a cross-sectional view, partly schematic, of another form of phosphine generator which uses the formulations of the present invention.
Figure 8 illustrates how the phosphine output from a tray containing a sample formulation in accordance with the present invention varies when the relative humidity of the air flowing past the tray is changed.
Figure 9 illustrates the way in which phosphine production from a tray containing a phosphide formulation exposed to moist air varies when the temperature and moisture content of the air are changed.
Figures 10 and 11 show the variation of the output of phosphine from respective trays containing samples of phosphide formulations, when the trays are exposed to moist air at different temperatures, over extended, periods.
Figure 12 illustrates one arrangement of a packaged formulation which assists in the relatively uniform production of phosphine during the period of use of mulation.
Figure 13 is a schematic diagram, showing one way in which the packaged formulations of the present invention may be used in a fumigation system for a vertical grain silo.
Figures 14 and 15 are schematic diagrams which illustrate alternative arrangements to that shown in Figure 13, by which phosphine may be generated and supplied to the conventional grain ventilation system of a vertical silo.

### Detailed Description of Formulations and Illustrated Phosphine Generators

To evaluate phosphide formulations prepared in accordance with the present invention, quantities of technical grade aluminium phosphide were mixed with various water-immiscible compounds, or mixtures of water-immiscible compounds, and the resultant formulations were dispersed in water or were exposed to moist air in a variety of experimental conditions. To produce most of the formulations, the aluminium phosphide was ground and only aluminium phosphide particles which passed through a sieve having a mesh size of 250 µm were used in the formulations. However, some samples of the formulations were produced using particles of aluminium phosphide which had a diameter greater than 250 µm. A small number of formulations were prepared by dispersing PHOSTOXIN (trade mark) pellets of aluminium phosphide in a mixture of water-immiscible compounds. All formulations tested yielded phosphine in a controlled manner when the formulations were placed in a water bath. In this regard, the size of the aluminium phosphide particles was unimportant. However, it was found that using aluminium phosphide particles having a diameter of less than 250 µm produced pastes which were easiest to extrude through a nozzle.

Several water-immiscible compounds were tested, but the best paste formulations were obtained when the water-immiscible compound was paraffin oil, petroleum jelly, or a mixture of paraffin oil and petroleum jelly. Formulations having an aluminium phosphide content of from 65 per cent by weight to 85 per cent by weight were found to be convenient to handle and have a useful capacity to produce phosphine. The preferred content of aluminium phosphide is from 70 per cent to 75 per cent if the formulation is to be extruded. If the formulation is to be packaged, as described later in this specification, then the preferred aluminium phosphide content is from 70 per cent to 80 per cent. (Note: when specifying the composition of formulations, all percentages quoted in this specification are by weight.)

A small quantity of CAB-O-SIL (trade mark) fumed silica was added as a thickening agent to some phosphide formulations prepared using paraffin oil as the water-immiscible compound. Earlier experimental work had shown that paraffin oil containing from 0.5 to 6.5 wt per cent fumed silica had a viscosity such that the mixture ranged from being almost indistinguishable from paraffin oil (with 0.5 per cent fumed silica) to a stiff gel (at 6.5 per cent fumed silica). It was found that when fumed silica was included in the paraffin oil used to prepare formulations of the present invention, only paraffin oil containing from 0.5 to 1.0 per cent fumed silica produced formulations which were extrudable. Furthermore, when small samples of these extrudable formulations were wetted with water, the samples broke up and reacted vigorously with a noticeable rise in temperature. When samples of the non-extrudable formulations containing fumed silica were added to a water bath stirred with a magnetic stirrer, the formulations (a) reacted vigorously after five minutes, and (b) produced a phosphine polymer at the surface of the water bath. Thus use of fumed silica as a thickening agent for formulations of the present invention is not recommended.

The effect of adding a surfactant to the water-immiscible material has also been investigated. The inclusion of a surfactant increases the reaction rate of the formulation. In one example, the addition of polyethylene glycol to petroleum jelly, to produce a water-immiscible material comprising about 75 per cent petroleum jelly and 25 per cent polyethylene glycol, enabled the production of a formulation which, when immersed in water, had a significantly increased reaction rate when compared with similar formulations prepared with paraffin oil and petroleum jelly. The inclusion of a surfactant in quantities of up to 10 per cent of the total weight of the formulation, therefore, is believed to be advantageous when the formulation is required to generate phosphine quickly, particularly when the formulation is to be packaged and subsequently exposed to moist air.

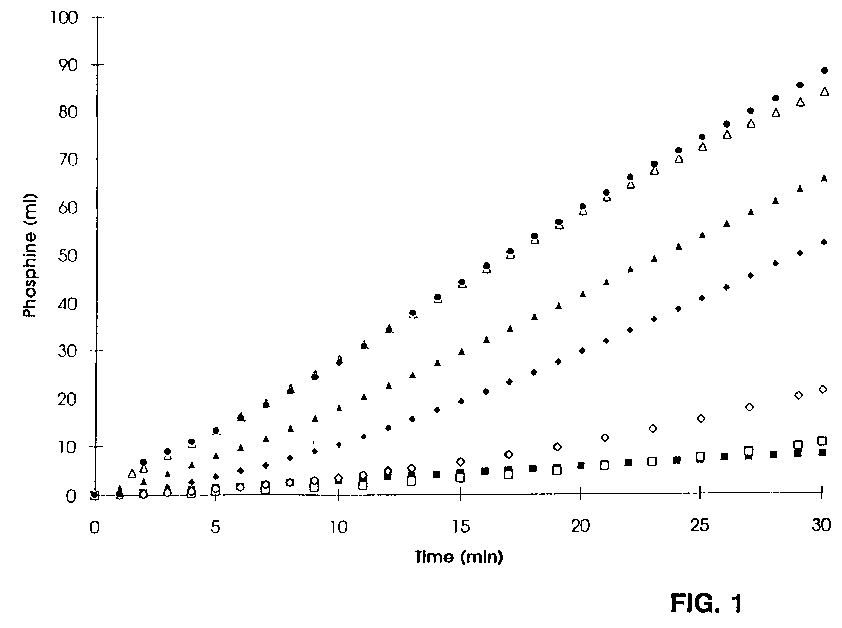

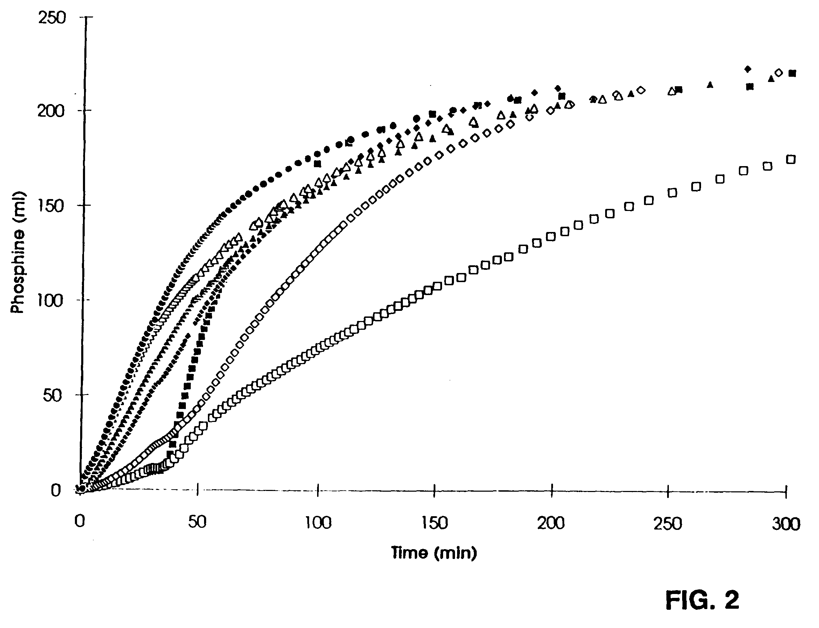

In one series of experiments conducted with the sample formulations, samples of the formulations, each weighing 1 gram and containing 0.73 gram of phosphide, were placed in a water bath at 23°C and the cumulative volume of the phosphine released was measured over a period of 300 minutes. In one experiment in this series, a sample consisting of 0.73 gram aluminium phosphide was placed in the water bath. For the first thirty minutes, the water of the water bath was not stirred. After 30 minutes, the water of the water bath was stirred continuously. In some experiments, a detergent, either COMPROX (trade mark) or TEEPOL (trade mark), was added to the water in the bath before the experiment was conducted. A selection of the results obtained in this series of experiments is shown in Figures 1 and 2. Figure 1 presents the data obtained in the first 30 minutes only of the experiments. Figure 2 provides the data for the entire five hours of the experiments. The formulations from which these data were obtained, and the additives in some of the water baths used, are detailed in Table 1.

**Table 1**

| Key for the Data Presented in Figures 1 and 2 | | | |
|---|---|---|---|
| Data shown by | Formulation | | Additive in water bath |
| | aluminium phosphide | water-immiscible material | |
| open squares | 73% | 27% paraffin oil | 3% COMPROX* |
| solid squares | 73% | 27% paraffin oil | nil |
| open diamonds | 73% | 27% petroleum jelly | nil |
| solid diamonds | 73% | 27% paraffin oil | 6% TEEPOL* |
| open triangles | 73% | 20.25% petroleum jelly | nil |
| | | 6.75% polyethylene glycol | |
| solid triangles | 73% | 27% petroleum jelly | 6% TEEPOL* |
| solid circles | 100% | nil | nil |

| | | | |
|---|---|---|---|
| * Trade Mark | | | |

As shown by the data in Figure 1, the aluminium phosphide powder produced its phosphine relatively quickly. The formulation comprising aluminium phosphide and paraffin oil produced phosphine at the slowest rate for the first 30 minutes, but once the water in the water bath was stirred, this formulation increased its rate of production of phosphine rapidly when there was no additive in the water bath, so that one hour after the start of the experiment with this formulation, the total volume of phosphine produced was comparable to that produced by most of the other formulations (the exceptions being the formulation containing 27 per cent petroleum jelly, when in a water bath with no additive, and the formulation containing 27 per cent paraffin oil in a water bath containing 3 per cent COMPROX).

The reason for the slower production of phosphine from formulations immersed in water containing the detergent COMPROX is not fully understood. The inclusion of heptane (a solvent) in the water has a similar effect on the rate of production of phosphine. It is believed that the COMPROX detergent, and also the heptane, reacts with the water-immiscible compound to form another protective layer around the phosphide particles. Only when the water has removed that additional protective layer can the water react with the phosphide to produce phosphine. Thus selection of an additive for the water can be used to increase, or decrease, the rate of production of phosphine using a formulation of the present invention.

The formulation which included polyethylene glycol in addition to its water-immiscible material had a phosphine production rate which was closest to that of aluminium phosphide powder.

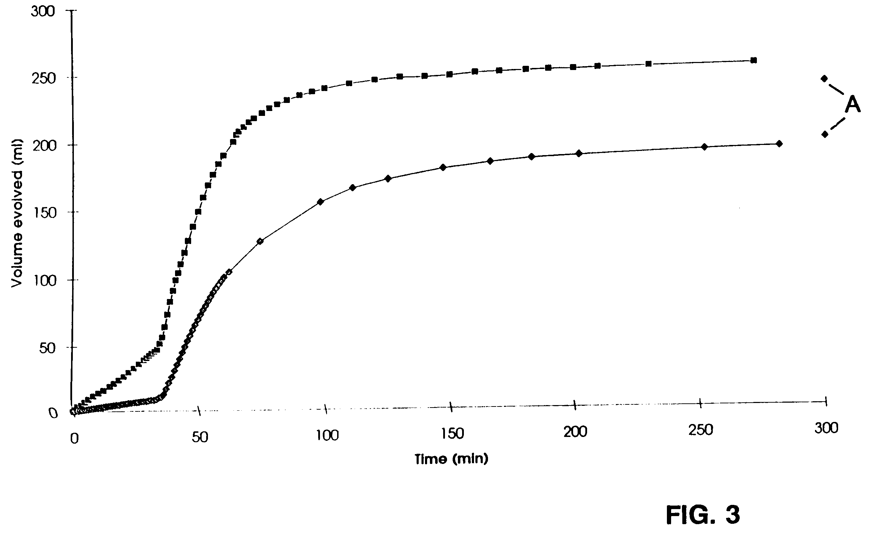

Some of the experiments of this series were repeated with the water bath at 40°C. Figure 3 shows the data obtained at both 23°C and 40°C when the formulation used was 73 per cent aluminium phosphide and 27 per cent paraffin oil. The more rapid release of phosphine at the higher water bath temperature reflects the fact that at the higher temperature, water removes the paraffin oil from the aluminium phosphide powder more quickly. The two data points shown by the reference A in Figure 3 refer to measurements made at times later than 300 minutes with the water bath at 23°C, and show the gradual convergence of the two curves of Figure 3.

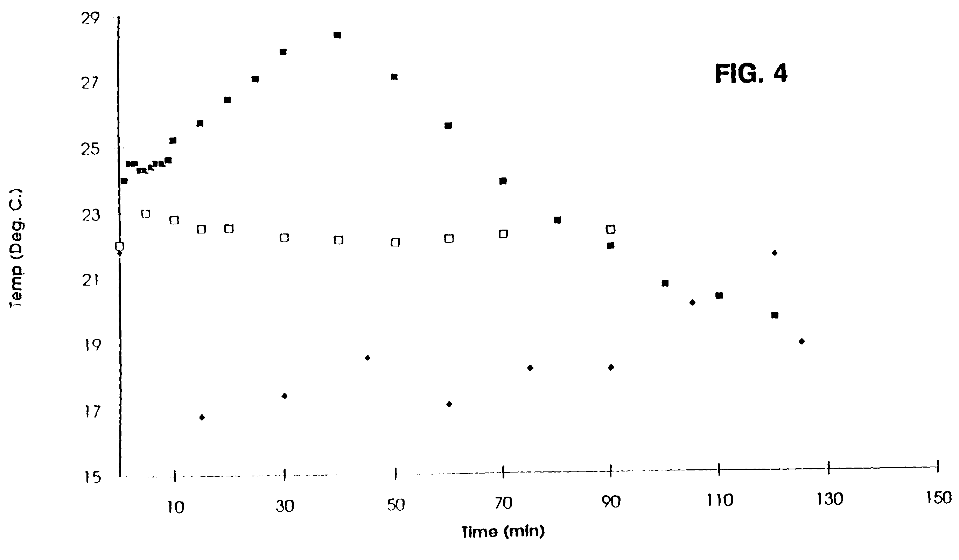

To illustrate that formulations of the present invention are inherently safer to use than the pellets of aluminium phosphide that have traditionally been used to produce phosphine, samples of 25 grams each of (i) PHOSTOXIN pellets and (ii) a formulation of the present invention having the consistency of a thin paste, were immersed in respective, but essentially identical, water baths at a temperature of 22°C. In addition, water at a temperature of 22°C was sprayed onto a 25 grams sample of the paste formulation. The observed variations in the temperature of the water with time are shown in Figure 4, in which the solid squares show the data obtained with the PHOSTOXIN pellets, and the open squares present the measurements obtained when the formulation was immersed in water. It will be noted that the rapid production of phosphine by the pellets is accompanied by a significant increase in temperature, to the level where ignition of the phosphine is a possibility. In contrast to this, the production of phosphine by the formulation comprising aluminium phosphide and paraffin oil produced a small increase in temperature, and the spraying of the formulation with water actually reduced the water temperature.

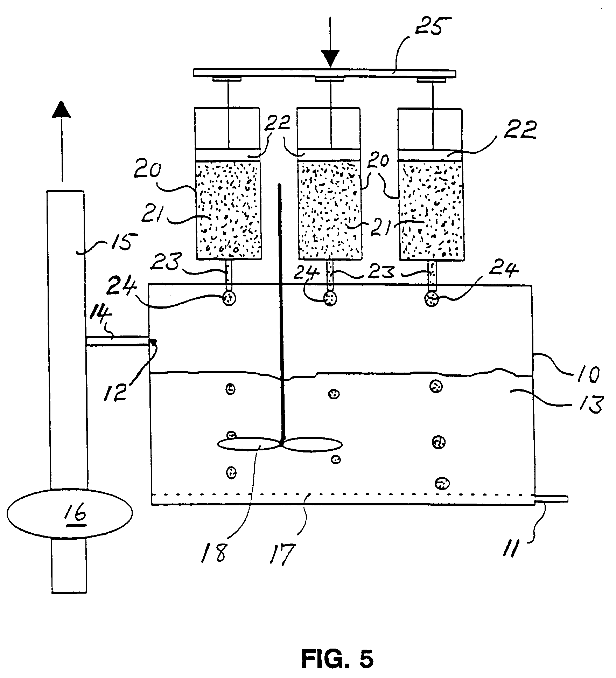

One form of apparatus for generating phosphine using an extrudable formulation in accordance with the present invention is illustrated in Figure 5. This illustrated equipment comprises a reaction chamber 10 containing water 13. The chamber 10 has an air or gas inlet port 11 near its base and a gas outlet port 12 above the normal level of the water 13 in the reaction chamber. The gas outlet port 12 is connected via conduit 14 to the fumigant delivery pipe 15 of a grain silo fumigation system. Gas (usually air) is forced through the pipe 15 by the action of a fan 16.

Three cartridges 20 are mounted above the ceiling or roof of the reaction chamber 10. (It will be appreciated that although three cartridges 20 have been included in this illustrated embodiment, the actual number of cartridges used in a particular application will depend upon various factors - including the size of the cartridge - and will range from a single cartridge to any practical maximum number of cartridges.) Each cartridge 20 contains a paste or thick slurry phosphide formulation 21, made in accordance with the formulation aspect of the present invention. A respective plunger or piston 22 bears upon the top of the formulation 21 in each cartridge. A respective pipe 23 having a small internal diameter extends from the base of each cartridge and either penetrates the roof or ceiling of the reaction chamber 10, or terminates in an aperture or nozzle in the roof or ceiling of the reaction chamber. Thus when a plunger or piston 22 is moved downwards within a cartridge 20, some of the paste or thick slurry 21 is forced through the associated pipe 23, to leave it as a globule or large drop 24, or as a short length or "slug" of the formulation, which falls into the water 13 in the reaction chamber.

The rate at which the slug or globule of the formulation disperses within the water 13 depends upon (a) the particle size of the phosphide, (b) the water-immiscible compound or compounds used to form the paste, (c) whether a wetting agent, surfactant or other chemical is included in the formulation, and (d) parameters associated with the water 13, including its acidity, temperature and degree of turbulence, and whether it contains any detergent.

The turbulence of the water 13 is controlled by the rate at which air or other gas (for example, carbon dioxide or nitrogen) is supplied to the reaction chamber through the inlet port 11, and whether this gas is bubbled through the water 13 by using a distribution plate 17 (or a tubular structure containing apertures or nozzles to permit the escape of gas) near the base or floor of the reaction chamber. Additional turbulence may be achieved by the inclusion of an optional stirrer 18, which, in the illustrated generator, comprises a stirring blade at the lower end of a shaft which passes through the roof or ceiling of the chamber 10 and which is rotated by a motor (not shown).

The phosphine produced by the reaction of the water 13 with the aluminium phosphide (or other metallic phosphide) in the formulation extruded through the apertures at the lower ends of the pipes 23 is carried out of the chamber (with the gas which has been pumped in through the port 11) through the outlet port 12. After passing along the conduit 14, the phosphine-containing gas is added to the gas stream which is being supplied to the silo through the pipe 15.

In most modern grain fumigation systems, a predetermined concentration of phosphine is maintained within the grain mass during fumigation. That concentration of phosphine is selected to be high enough to effect proper fumigation, but as economical as possible in the use of the phosphine. Thus feedback loops, containing sensors which are responsive to the concentration of phosphine in the grain mass, are often installed to control the rate at which phosphine is supplied to a silo. If the generator illustrated in Figure 5 is used with such a control system, monitors of phosphine concentration may be included in the pipe 15, or in the silo, to provide data for determining whether the rate of production of phosphine in the reaction chamber should be increased or decreased to maintain a required concentration of phosphine in the grain mass.

In the apparatus shown in Figure 5, the rate of supply of the slugs or globules 24 of the phosphide formulation to the reaction chamber is controlled by the rate of downward movement of the drive plate 25, which is connected to each plunger 22. Any convenient known form of drive mechanism may be used to move the drive plate 25. It will be appreciated that other methods may be used to supply the phosphide formulation to the reaction chamber (for example, the use of a peristaltic pump or an auger or screw feed).

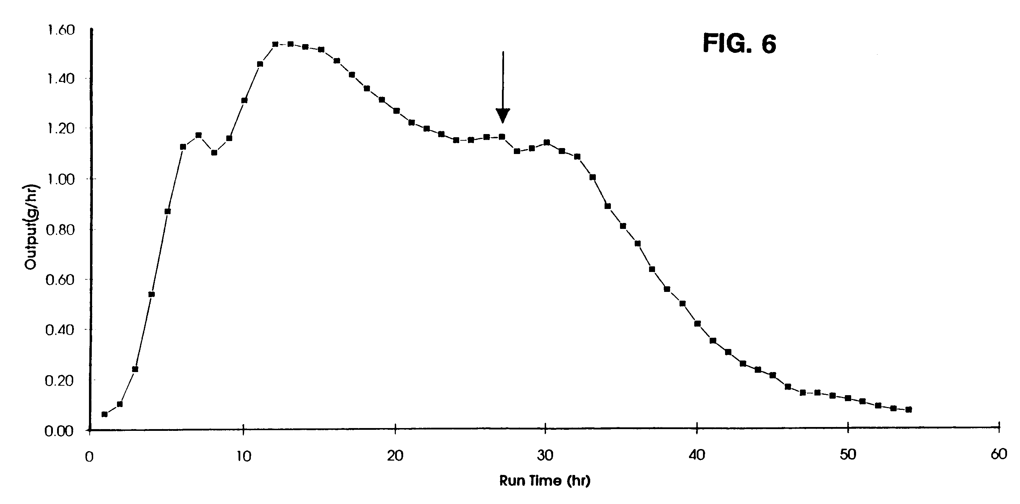

A prototype of the phosphine generator illustrated in Figure 5, but containing only one cartridge 20, has been used by the present inventors for experiments with aluminium phosphide formulations. Figure 6 presents, in the form of a graph, the data obtained in one such experiment using the prototype generator, over a period of 55 hours. In this experiment, the water in the reaction vessel contained a small quantity of detergent, and for the first 28 hours of the experiment, there was a continuous slow addition of a formulation comprising 73 per cent aluminium phosphide and 27 per cent petroleum jelly.

The data of Figure 6 show the output of phosphine (in grams per hour) from the prototype generator. The uneven slope of the solid curve connecting the data points is believed to be due to variations in the length of the slugs of formulation added to the water as the plunger in the cartridge was slowly forced into the cartridge. However, there is a clear indication of the expected increase in the rate of production of phosphine as more formulation enters the water and reacts with it, followed by a levelling off of the phosphine production rate when the aluminium phosphide of the first slugs of the formulation has completely reacted to form phosphine and aluminium hydroxide. After 50 hours, almost all of the aluminium phosphide has reacted.

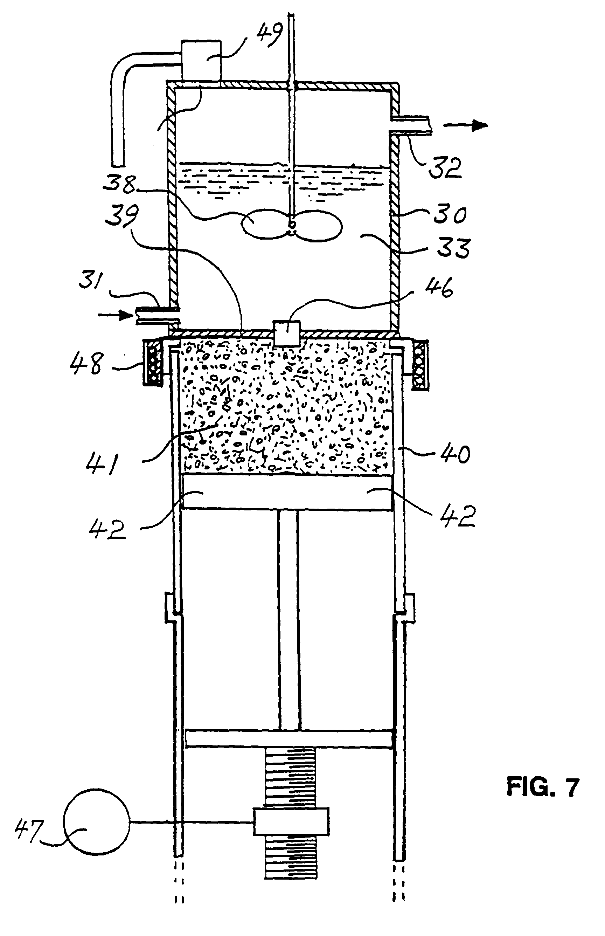

A proposed alternative form of phosphine generator is shown in Figure 7. This generator has a number of features which are similar to those of the generator illustrated in Figure 5. It includes a reaction chamber 30 having a gas inlet port 31 and a gas outlet port 32; the chamber 30 contains water 33, which may be stirred or agitated by a stirrer 38.

The arrangement for supplying a phosphide formulation to the chamber 30, however, is different from that used in the Figure 5 embodiment, and a filter 49 is provided at a water inlet/outlet port 45, to remove residue from the water 33 when it is pumped from the chamber 30 for periodic cleaning of the chamber.

A cylindrical cartridge 40 is detachably mounted beneath the chamber 30. The cartridge 40 contains a phosphide formulation 41 in accordance with the present invention. A plate 39, which constitutes the floor or base of the reaction chamber 30, is fitted with at least one known form of one way valve 46 through which the formulation 41 can enter the chamber 30 (but through which water from the chamber 30 cannot pass). The formulation 41 is forced through the valve (or valves) 46 by the action of a piston 42, which is a close fit within the cylindrical cartridge 40. Usually, the piston 42 will be part of a separate assembly which is connected to the lower end of the cartridge 40 after the cartridge has been attached beneath the chamber 30. The piston assembly shown in Figure 7 includes a worm and nut drive mechanism, actuated by an electric motor 47. However, any other suitable form of known drive mechanism (for example, a rack and pinion arrangement) may be used to control the movement of the piston 42 within the cartridge 40.

If the phosphide formulation 41 is prepared using a low melting point wax, then a heater 48 will be included around the region which is adjacent to (but below) the reaction chamber 30. Alternatively, or in addition, an electrical heating element may be included in a groove cut into the lower face of the plate 39 (this arrangement is not illustrated). The heater and/or the heating element melts or softens the wax component of the formulation to an extent sufficient to enable the formulation adjacent to the plate 39 to be forced through the valve (or valves) 46 and into the water 33. The water 33 must be at a temperature which permits the formulation to be dispersed within the water, and not to re-solidify. A water heater may need to be included in the reaction chamber for this purpose. However, if the phosphide formulation comprises a mixture of powdered aluminium phosphide with a carrier of paraffin oil or petroleum jelly, having a paste-like consistency, then there will be no need for the heater 48 or for a heating element in a groove in the plate 30 or a heater in the water 33.

The factors controlling the rate of production of phosphine by the generator illustrated in Figure 7 are the same as those, noted above, which control the phosphine production rate in the embodiment of Figure 5. If the reactor of Figure 7 is to be used to supply phosphine to a grain silo or the like, the gas outlet port 32 will be connected to an airflow supply pipe in the same manner as the outlet port 12 is connected to the pipe 15 in the Figure 5 embodiment.

The packaged formulation aspect of the present invention is primarily for use in the generation of phosphine using a gas containing moisture. Control of the relative humidity (moisture content) of the gas and also of the area of the formulation that is exposed to the gas enables the rate at which phosphine is produced to be controlled.

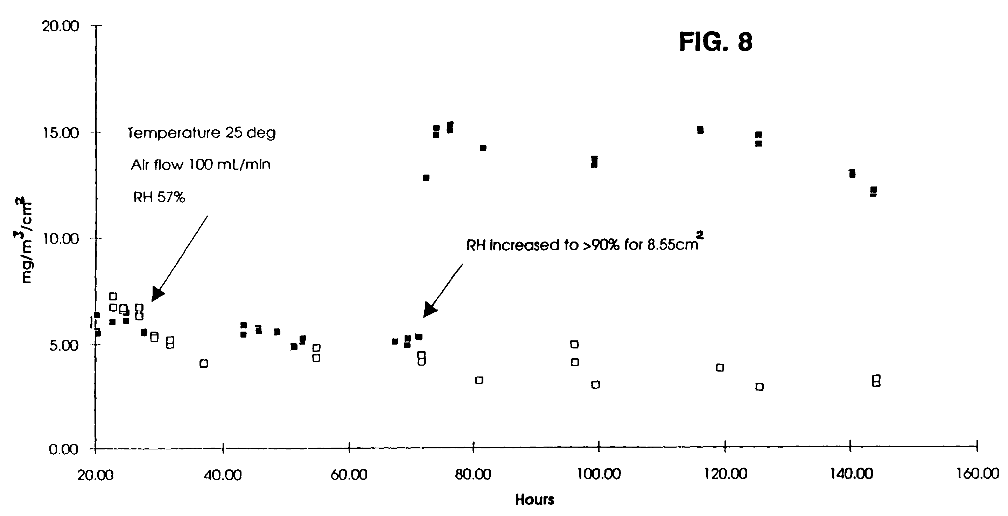

A number of experiments have been undertaken by the present inventors in an investigation of the performance of packaged phosphide formulations. In one experiment, the rate of production of phosphine from formulations having an exposed area of (i) 4.50 cm² and (ii) 8.55 cm² was investigated. The results obtained with a formulation consisting of a paste comprising 73 per cent aluminium phosphide and 27 per cent paraffin oil are presented in Figure 8, in which the solid squares are data obtained with 8.55 cm² of the formulation exposed and the open squares present data obtained with 4.50 cm² of the formulation exposed. It should be noted
(a) that the phosphine production shown in Figure 8 is expressed in milligrams per cubic metre of gas flowing past the formulation, per square centimetre of exposed formulation (mg.m⁻³.cm⁻²);
(b) that only the data obtained after steady state conditions had been established (20 hours after the formulations were first exposed to moist air) is presented in Figure 8;
(c) that the formulation with 4.50 cm² exposed was at all times in an airflow of 100 ml.min⁻¹, having a temperature of 25°C and a relative humidity of 57 per cent; and
(d) that the formulation with 8.55 cm² exposed was at all times in an airflow of 100 ml.min⁻¹, having a temperature of 25°C, but the relative humidity of the air was changed from the initial value of 57 per cent to a value of greater than 90 per cent after 75 hours had elapsed since the start of the experiment.

It will be seen from Figure 8 that the rate of production of phosphine per unit area of exposed formulation is the same for each sample of the formulation when the air flow and moisture content are the same. However, increasing the moisture content of the air results in a corresponding increase in the production of phosphine.

In another experiment, trays containing identical samples of a formulation comprising 73 per cent aluminium phosphide and 27 per cent paraffin oil were exposed to an airflow of moist air and the phosphine production rate was monitored when, after steady state conditions had been established, the temperature and moisture content of the air were varied. In the first 23.5 hours of the experiment, the air of the airflow had a temperature of 23°C and a relative humidity of greater than 90 per cent. After 23.5 hours, the air temperature was increased to 40°C but the moisture content of the air was unaltered. After 26.5 hours, the moisture content of the air at 40°C was increased, so that the air again had a relative humidity of greater than 90 per cent (that is, the water content of the air was increased from about 20 gm.m⁻³ to about 45 gm.m⁻³).

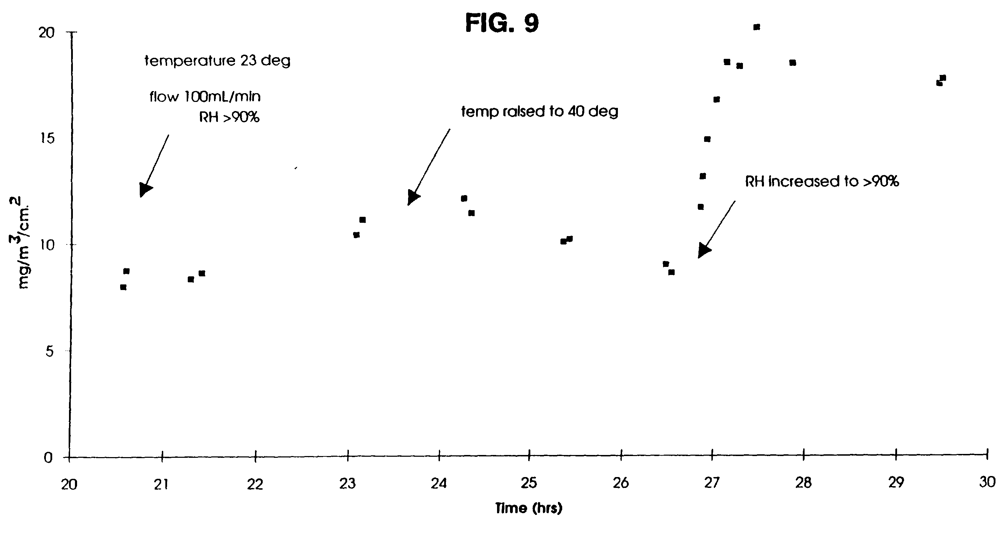

The data obtained in this experiment are presented in Figure 9. As will be seen from this data, there was no significant increase in the rate of production of phosphine when, after 23.5 hours, the air temperature was increased but the water content was unchanged. However, increasing the moisture content of the airflow after 26.5 hours produced a dramatic increase in the phosphine production rate.

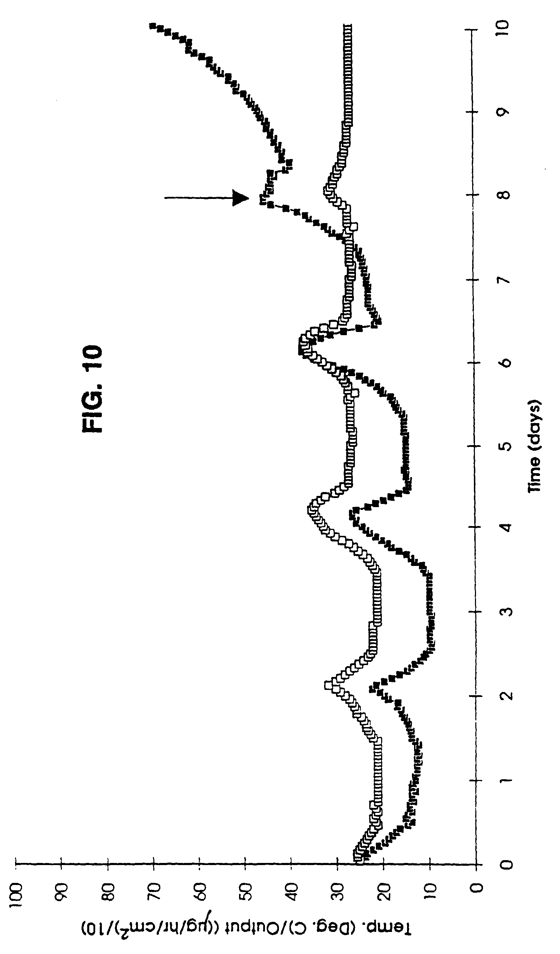

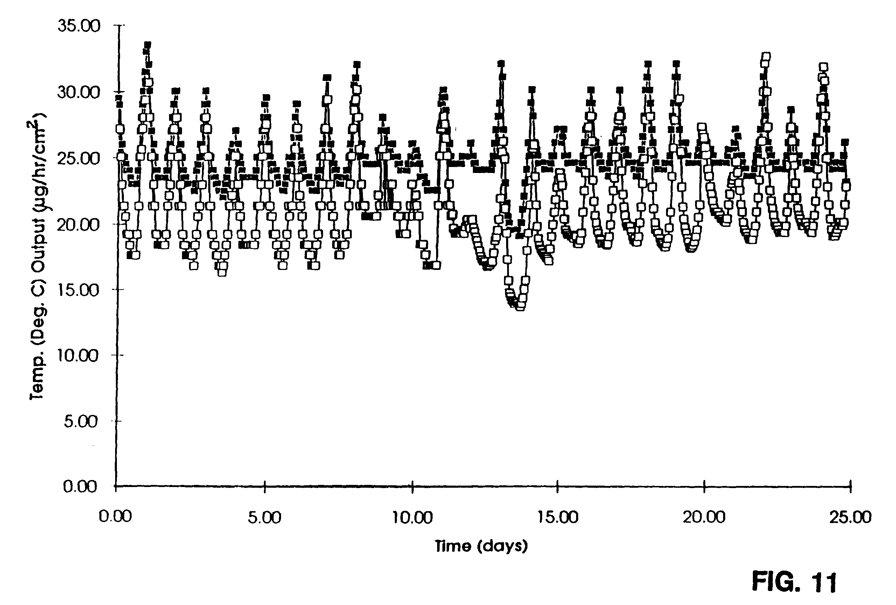

Further experiments, to investigate the potential of packaged formulations to fumigate grain silos over periods of (i) 10 to 12 days, and (ii) 25 to 30 days (in accordance with the fumigation method described in the specification of International patent application No PCT/AU90/00268), were conducted with trays of formulations exposed to saturated air (obtained by bubbling air at ambient temperature through a water bath, also at ambient temperature). Over the extended periods of these experiments, there was some variation of the ambient temperature, and hence of the moisture content of the air and the rate of production of phosphine (which was measured in terms of micrograms of phosphine produced per hour per square centimetre of exposed formulation surface). The relevant data for two experiments (one lasting 10 days, the other lasting 25 days) are presented in Figures 10 and 11.

The data in Figure 10 was obtained using a formulation which comprised 80 per cent aluminium phosphide and 20 per cent paraffin oil. The solid squares in Figure 10 show the variation of phosphine output with time; the open squares represent the measurements of ambient temperature. The apparent perturbation of the phosphine output at approximately 8 days after the experiment started was due to a phenomenon that had also been observed with smaller samples of other formulations containing 80 per cent aluminium phosphide, exposed to moisture-containing air flows. This phenomenon is an apparent breakdown of the paste structure of the formulation, due to the powdery nature of the aluminium hydroxide formed by the reaction of the aluminium phosphide with water vapour. The aluminium hydroxide expands as it becomes more powdery, with the result that there is an increase in the surface of the formulation that is exposed to the airflow, and consequently an increase in the rate of production of phosphine.

The data in Figure 11 were obtained using a formulation comprising 73 per cent aluminium phosphide and 27 per cent paraffin oil. In Figure 11, the solid squares represent the ambient temperature measurements and the open squares show the rate of production of phosphine. In this experiment, there was no breakdown and expansion of the formulation due to the production of aluminium hydroxide. The formulation produced phosphine at a consistent rate for the entire 25 days of the experiment.

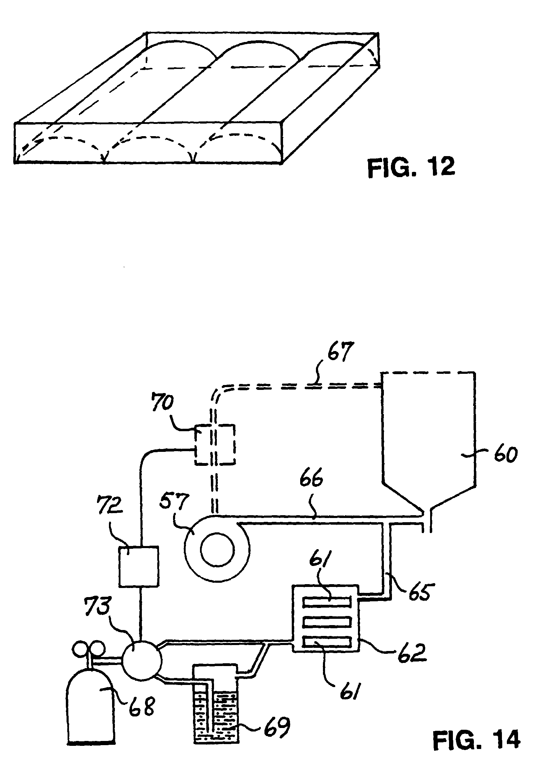

The apparent problem caused by the expansion of the aluminium phosphide, noted above with reference to the data shown in Figure 10, which results in the increased production of phosphine as the phosphide in the formulation is "used up", can be overcome by packaging the formulation so that it has a convex surface when exposed to moist air (for example, forming the formulation into a series of ridges, as shown in Figure 12). This form of packaging results in the greatest area of the formulation being exposed to the airflow initially, and a decrease of the exposed area of the formulation when the aluminium phosphide in the outer region has completely reacted with the water in the airflow. As the area of formulation is reduced, expansion of the formulation due to the production of powdery aluminium hydroxide increases the area presented to the airflow. Choosing an appropriate profile for the convex surface or surfaces of the formulation thus enables an essentially uniform production rate of phosphine to be maintained as the formulation is "used up".

Other methods of ensuring an essentially uniform production rate of phosphine with formulations which act in the manner illustrated in Figure 12 include:
(a) presenting the formulation in layers having different compositions, with the outermost layer having the highest content of aluminium phosphide and the innermost layer having the lowest concentration of aluminium phosphide; and
(b) placing the formulation in one or more small boxes, having inclined walls, so that when the phosphide in the outer (uppermost) region of the formulation has complete reacted with the water in the airflow, a smaller area of active formulation is presented to the airflow.

It will be apparent that although a variety of packaging arrangements may be used to produce the packaged formulation of the present invention, it is essential that the material of the container (including any closure member that may form part of the container) is impermeable to water and water vapour, and is chemically inert with respect to phosphides and with respect to the other material or materials used to prepare the paste. Preferably the container will be sufficiently robust to enable the packaged phosphide formulations to be transported to remote areas, and handled in the normal manner, without the likelihood of rupturing the container, or the inadvertent opening or removal of the removable region of the container. One particularly suitable construction comprises a thick aluminium foil tray, with a foil lid or closure member which is removably bonded to the tray. Other suitable containers are generally flat cans with removable regions formed in a known manner in the upper surface thereof, the removal of those regions being effected by applying a force to a tag attached to the removable region. Alternatively, waxed cardboard containers, or plastic containers, with removable lids, or having apertures closed by foil or by plastic closure members bonded to the container using a suitable adhesive, may be used as containers of phosphide formulations. These examples are not intended to be exhaustive, or limiting as to the form of construction of the container of the phosphide formulation.

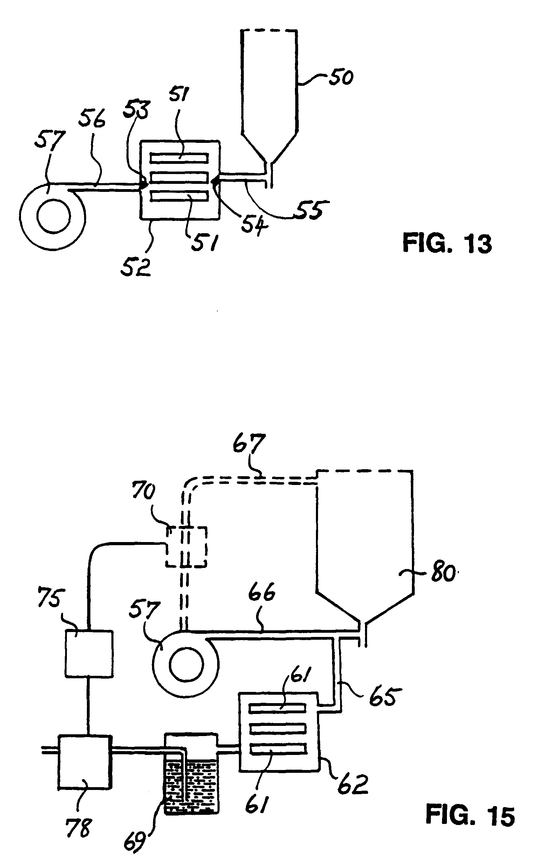

Figure 13 shows one way in which the packaged formulations of the present invention may be used in the fumigation of a vertical silo of stored grain or the like. It is emphasised that fumigation of a silo represents only one application of the present invention, which can be used in the fumigation of other enclosures and structures, such as a shed, a barn, a railway wagon, a house or a covered bagstack (this list is not exhaustive).

In the arrangement shown in Figure 13, a series of containers 51 of the paste-like phosphide formulation are placed on racks in a chamber 52 having a gas inlet port 53 and a gas outlet port 54. The outlet port is connected by a duct 55 to a gas inlet at the base of a vertical silo 50.

The gas inlet port 53 is connected via a duct 56 to a blower or fan 57, which supplies air to the chamber 52.

Each of the containers 51 has its removable surface region (or at least one of its removable surface regions) removed. Thus air blown into the silo 50 by the fan 51 passes over the containers 51 and some of the moisture in the air contacts the exposed surface of the paste formulation. After diffusing through the water-immiscible material, the moisture in the airflow reacts with the phosphide particles in the formulation to produce phosphine. The phosphine so produced is then swept into the air flowing past the containers and (via duct 55) into the grain mass in the silo 50.

As noted above, the size (and number) of the containers 51, the amount of phosphide formulation in each container, the exposed area of the formulation, and the moisture content of the air being blown into the silo are the basic parameters that determine the rate at which phosphine is generated, and the duration of such phosphine generation. Thus a person of reasonable skill in the fumigation field can readily assess the required arrangement for effective fumigation of the silo 50 - and for effective fumigation using the arrangements illustrated in Figures 14 and 15, which are described below.

The arrangement illustrated in Figure 14 shows how phosphine may be supplied to the air being pumped through a vertical silo 60. The air is blown into the silo by a fan or blower 57, through a duct 66. If the silo 60 is a sealed silo, the gas blown into the silo may be recirculated, via a duct 67 (shown in dashed outline) which leads from the top of the silo 60 to the air input region of the fan 57.

Phosphine for the fumigation of the grain mass stored in the silo 60 is generated using containers 61 of paste formulations of aluminium phosphide (or magnesium phosphide or any other suitable phosphide), placed on racks in a chamber 62. The removable regions of the containers 61 are removed, so that when air, nitrogen, carbon dioxide or other suitable gas, from a cylinder 68, which has been humidified by passage through a water bath 69, passes over the containers 61, there is a reaction between some of the water vapour in the gas stream and the phosphide in the paste formulation, and phosphine is produced. The phosphine is carried by the air, nitrogen, carbon dioxide or other gas, via duct 65, into the duct 66, where it is incorporated into the airflow and is carried into the silo 60.

If there is a recirculation of fumigant-bearing gas through the silo 60, a sensor arrangement 70 in the return duct 67 monitors the concentration of phosphine in the gas which has passed through the silo. The sensor 70 generates an electrical signal which is input to the control mechanism 72 of a proportioning valve 73 having one inlet (connected to the gas outlet of the cylinder 68) and two outlets (one of which is connected to the water bath 69,the other being connected directly to the gas inlet port of the chamber 62). The instantaneous setting of the valve 73 controls the quantity of gas from the cylinder 68 which enters the water bath 69, and thus it controls the water content of the air, nitrogen or carbon dioxide supplied to the chamber 62, and hence the rate of generation of phosphine. Control of the valve 73 can thus be used to ensure that the concentration of phosphine in the gas supplied to the silo 60 is maintained at a predetermined value.

The arrangement for fumigation of the silo 80 that is shown in Figure 15 is similar to that used for fumigation of the silo 60 in Figure 14, and thus (with the exception of the silo) the components having the same function have been given the same reference numerals. The only difference an the two arrangements is that the cylinder 68 of air, nitrogen, carbon dioxide or other suitable gas has been replaced by an air pump 78, and (if the silo 80 is closed and the fumigant-containing gas is recirculated) the signal generated by the phosphine sensor 70 is input to a control mechanism 75, which controls the operation of the pump 78. Thus further explanation of the generation of phosphine, and its supply to the silo, using the arrangement shown in Figure 15, is unnecessary.

It will be apparent to persons who are familiar with phosphine fumigation that, although specific examples of the present invention have been described above, modifications to and variations from those exemplary embodiments may be made without departing from the present inventive concept.

## Claims

1. A phosphide formulation for use in the controlled production of phosphine, the formulation comprising an intimate mixture of
(a) a particulate phosphide which reacts with water to form phosphine; and
(b) a water-immiscible compound which is inert with respect to the phosphide, said water-immiscible compound being selected from the group consisting of (i) a non-volatile oil, (ii) a low melting point wax, (iii) a mixture of a non-volatile oil with either petroleum jelly or a low melting point wax, and (iv) a mixture of a non-volatile oil, petroleum jelly and a low melting point wax;
said intimate mixture having a consistency, at the temperature of use of the mixture, of an extrudable paste or thick slurry; said particulate phosphide comprising from 65 per cent (by weight) to 85 per cent (by weight) of the formulation.

2. A phosphide formulation as defined in claim 1, in which the particulate phosphide comprises from 70 per cent (by weight) to 75 per cent (by weight) of the formulation.

3. A phosphide formulation as defined in claim 1 or claim 2, in which the particulate phosphide has a particle size of less than 250 µm.

4. A phosphide formulation as defined in any preceding claim, in which said formulation includes a surfactant.

5. A phosphide formulation as defined in claim 4, in which said surfactant comprises up to 10 per cent (by weight) of the formulation.

6. A phosphide formulation as defined in claim 5, in which the surfactant is polyethylene glycol.

7. A method of generating phosphine in a controlled manner, said method comprising: causing a small quantity of a phosphide formulation, as defined in any preceding claim, to be introduced periodically into a water bath, whereby water in the water bath progressively removes the water-immiscible compound from the formulation so that the phosphide particles are progressively contacted by the water of the water bath, whereupon the phosphide particles react with the water of the water bath to produce phosphine.

8. A method as defined in claim 7, in which the water in the water bath contains a detergent.

9. Apparatus for the controlled production of phosphine, said apparatus comprising:
(a) a reaction chamber adapted to contain water, said reaction chamber having a gas inlet port and a gas outlet port, the gas outlet port being above the normal level of water in the chamber;
(b) a container adapted to contain a phosphide formulation as defined in any one of claims 1 to 6, the interior of the container being connected to the reaction chamber via a small aperture or nozzle; and
(c) formulation transfer means operatively associated with said container for causing a formulation within the container to be transferred at a controlled rate through the aperture or nozzle and into the reaction chamber, where the transferred formulation contacts the water in the reaction chamber, whereupon the water in the reaction chamber progressively removes the water-immiscible compound from the transferred formulation, thereby progressively exposing the phosphide particles in the transferred formulation to the water in the reaction chamber, which reacts with the phosphide particles to produce phosphine.

10. Apparatus as defined in claim 9, in which the reaction chamber has a roof, said container is mounted above the reaction chamber, and said aperture or nozzle is located in the roof of the reaction chamber.

11. Apparatus as defined in claim 9, in which the reaction chamber has a floor, said container is mounted below said reaction chamber, the interior of said container is connected to the reaction chamber via an aperture in said floor, and said aperture is closed by a one-way valve, said valve permitting said formulation to be transferred from said container to the reaction chamber.

12. Apparatus as defined in claim 11, in which the water-immiscible compound of said formulation comprises a low melting point wax which is solid at room temperature; said apparatus including first heating means in said floor and second heating means operatively associated with said container, said first heating means being adapted to heat said formulation to a temperature sufficient to enable its extrusion through said valve; said second heating means being adapted to heat water in the reaction chamber to a temperature such that said low melting point wax does not solidify when the formulation enters the reaction chamber via said valve.

13. Apparatus as defined in any one of claims 9 to 12, in which said formulation transfer means comprises (i) a piston moveable within said container, (ii) a peristaltic pump, or (iii) a screw feed mechanism.

14. A phosphide formulation as defined in any one of claims 1 to 6, said formulation being packaged within a moisture-impervious container, said container having at least one aperture therein, said or each aperture being closed by a respective moisture-impervious closure member, said or each closure member being removable to expose the formulation packed in the container.

15. A packaged phosphide formulation as defined in claim 14, in which the formulation is a stiff paste, arranged within said container so that the formulation presents at least one convex surface when said at least one closure member is removed to expose the formulation.

16. A method of generating phosphine in a controlled manner, said method comprising the steps of
(a) placing a packaged formulation as defined in claim 14 or claim 15 within a region through which a gas can flow, said or at least one closure member of the container being subsequently or previously removed from the container; and
(b) causing a moisture-containing carrier gas to flow through said region and past the exposed phosphide formulation, whereby the water in the carrier gas reacts with the phosphide in the formulation to form phosphine, which is incorporated into the carrier gas.

17. A method of generating phosphine within a fumigation enclosure, said method comprising placing a packaged formulation as defined in claim 14 or claim 15 in the enclosure, with the or at least one closure member removed, to thereby expose the phosphide formulation to the air or other gas within the enclosure, whereby moisture in the air or other gas within said enclosure reacts with the phosphide in the formulation to form phosphine, which permeates throughout the enclosure.

18. Apparatus for generating a fumigation gas comprising a carrier gas and phosphine, said apparatus comprising:
(a) a chamber adapted to contain at least one packaged formulation as defined in claims 14 or claim 15 with the or at least one closure member removed, said chamber having a gas inlet port and a gas outlet port, said gas inlet port and said gas outlet port being located so that a gas flowing through said chamber from said inlet port to said outlet port flows past said at least one packaged formulation; and
(b) carrier gas supply means connected to said gas inlet port to provide a carrier gas flow through said chamber to said gas outlet port, whereby moisture in said carrier gas reacts with the phosphide in the exposed formulation to thereby produce phosphine, which is incorporated into said carrier gas.

19. Apparatus as defined in claim 18, in which said carrier gas supply means is a cylinder containing air, nitrogen or carbon dioxide, or is an air pump, and said apparatus includes a water bath interposed between the outlet from said cylinder or said air pump and said gas inlet port, for humidifying the carrier gas.

## Patentansprüche

1. Phosphidrezeptur zur Verwendung bei der gesteuerten Herstellung von Phosphin, umfassend ein inniges Gemisch aus
(a) einem mit Wasser unter Phosphinbildung reagierenden teilchenförmigen Phosphid und
(b) einer gegenüber dem Phosphid inerten, mit Wasser nicht mischbaren Verbindung, ausgewählt aus der Gruppe, bestehend aus (1) einem nichtflüchtigen Öl, (ii) einem niedrigschmelzenden Wachs, (iii) einem Gemisch aus einem nichtflüchtigen Öl mit entweder Rohvaseline oder einem niedrig schmelzenden Wachs und (iv) einem Gemisch aus einem nichtflüchtigen Öl, Rohvaseline und einem niedrigschmelzenden Wachs,
wobei das innige Gemisch bei der Gebrauchstemperatur die Konsistenz einer extrudierbaren Paste oder dicken Aufschlämmung aufweist und das teilchenförmige Phosphid 65 bis 85 Gew.-% der Rezeptur ausmacht.

2. Phosphidrezeptur nach Anspruch 1, in welcher das teilchenförmige Phosphid 70 bis 75 Gew.-% der Rezeptur ausmacht.

3. Phosphidrezeptur nach Anspruch 1 oder 2, in welcher das teilchenförmige Phosphid eine Teilchengröße von weniger als 250 µm aufweist.

4. Phosphidrezeptur nach einem der vorhergehenden Ansprüche, enthaltend ein Netzmittel.

5. Phosphidrezeptur nach Anspruch 4, in welcher das Netzmittel bis zu 10 Gew.-% der Rezeptur ausmacht.

6. Phosphidrezeptur nach Anspruch 5, wobei das Netzmittel aus Polyethylenglykol besteht.

7. Verfahren zur Erzeugung von Phosphin auf gesteuerte Art und Weise durch periodisches Eintragen einer geringen Menge einer Phosphidrezeptur gemäß der Definition nach einem der vorhergehenden Ansprüche in ein Wasserbad, wobei das in dem Wasserbad enthaltene Wasser fortschreitend die mit Wasser nicht mischbare Verbindung aus der Rezeptur entfernt, so daß die Phosphidteilchen fortschreitend mit dem Wasser des Wasserbads kontaktiert werden, wobei sie mit dem Wasser des Wasserbads unter Phosphinbildung reagieren.

8. Verfahren nach Anspruch 7, wobei das im Wasserbad enthaltene Wasser ein Detergens enthält.

9. Vorrichtung zur gesteuerten Herstellung von Phosphin, umfassend
(a) eine für eine Wasseraufnahme ausgestaltete Reaktionskammer mit einer Gaseinlaßöffnung und einer Gasauslaßöffnung, wobei die Gasauslaßöffnung oberhalb des normalen Wasserniveaus in der Kammer angeordnet ist;
(b) einen zur Aufnahme einer Phosphidrezeptur gemäß der Definition nach einem der Ansprüche 1 bis 6 ausgestalteten Behälter, dessen Inneres über eine kleine Öffnung oder Düse mit der Reaktionskammer in Verbindung steht, und
(c) eine operativ mit dem Behälter assoziierte Rezegturübertragungseinrichtung zum Eintrag der in dem Behälter befindlichen Rezeptur mit gesteuerter Geschwindigkeit durch die Öffnung oder Düse in die Reaktionskammer, in welcher die eingetragene Rezeptur mit dem in der Reaktionskammer befindlichen Wasser in Kontakt gelangt, wobei das in der Reaktionskammer befindliche Wasser fortschreitend die mit Wasser nicht mischbare Verbindung aus der eingetragenen Rezeptur entfernt und dadurch fortschreitend die in der eingetragenen Rezeptur enthaltenen Phosphidteilchen der Einwirkung des in der Reaktionskammer befindlichen Wassers ausgesetzt werden, das mit diesen unter Bildung von Phosphin reagiert.

10. Vorrichtung nach Anspruch 9, in welcher die Reaktionskammer ein Dach aufweist, der Behälter oberhalb der Reaktionskammer montiert ist und sich die Öffnung oder Düse im Dach der Reaktionskammer befindet.

11. Vorrichtung nach Anspruch 9, in welcher die Reaktionskammer einen Boden aufweist, der Behälter unter der Reaktionskammer montiert ist, das Innere des Behälters mit der Reaktionskammer über eine in dem Boden vorgesehene Öffnung in Verbindung steht und die Öffnung mittels eines Rückschlagventils verschlossen wird, wobei das Ventil einen Eintrag der Rezeptur aus dem Behälter in die Reaktionskammer ermöglicht.

12. Vorrichtung nach Anspruch 11, in welcher die mit Wasser nicht mischbare Verbindung der Rezeptur ein bei Raumtemperatur festes niedrigschmelzendes Wachs umfaßt, die Vorrichtung eine erste Heizeinrichtung in dem Boden und eine zweite, mit dem Behälter operativ assoziierte Heizeinrichtung aufweist, die erste Heizeinrichtung zum Erwärmen der Rezeptur auf eine ihr Auspressen durch das Ventil ermöglichende, hierfür ausreichend hohe Temperatur ausgelegt ist und die zweite Heizeinrichtung zum Erwärmen des in der Reaktionskammer befindlichen Wassers auf eine Temperatur, bei der das niedrigschmelzende Wachs beim Eintritt der Rezeptur in die Reaktionskammer über das Ventil nicht fest wird, dient.

13. Vorrichtung nach einem der Ansprüche 9 bis 12, in welcher die Rezepturübertragungseinrichtung (i) einen in dem Belälter beweglichen Kolben, (ii) eine peristaltische Pumpe oder (iii) einen Schneckendosiermechanismus umfaßt.

14. Phospidrezeptur nach einem der Ansprüche 1 bis 6, welche in einem feuchtigkeitsundurchlässigen Behälter abgepackt ist, wobei der Behälter mindestens eine Öffnung aufweist, die betreffende eine oder jede Öffnung mit einem jeweiligen feuchtigkeitsundurchlässigen Verschlußteil verschlossen ist und das betreffende eine oder jede Verschlußteil zur Freigabe der in dem Behälter abgepackten Rezeptur entfernbar ist.

15. Abgepackte Phosphidrezeptur nach Anspruch 14, wobei es sich bei der Rezeptur um eine steife Paste handelt, die in dem Behälter derart angeordnet ist, daß die Rezeptur beim Entfernen mindestens eines Verschlußteils zur Freigabe der Rezeptur mindestens eine konvexe Oberfläche anbietet.

16. Verfahren zur Erzeugung von Phosphin auf gesteuerte Art und Weise in den folgenden Stufen:
(a) Einbringen einer abgepackten Rezeptur nach Anspruch 14 oder 15 in einen Bereich, der von einem Gas durchströmt werden kann, wobei das betreffende oder mindestens eine Verschlußteil des Behälters anschließend oder zuvor von dem Behälter entfernt wird, und
(b) Hindurchleiten eines feuchtigkeitshaltigen Trägergases durch den Bereich und Vorbeileiten des feuchtigkeitshaltigen Trägergases an der freiliegenden Phosphidrezeptur, wobei das in dem Trägergas enthaltene Wasser mit dem Phosphid in der Rezeptur unter Bildung eines in das Trägergas einverleibten Phosphins reagiert.

17. Verfahren zur Erzeugung von Phosphin innerhalb eines geschlossenen Begasungs- bzw. Desinfektionsraums durch Einbringen einer abgepackten Rezeptur gemäß Anspruch 14 oder 15 in den umschlossenen Raum mit dem oder mindestens einem entfernten Verschlußteil, um die Phospidrezeptur der Einwirkung der Luft oder einem sonstigen Gas in dem geschlossenen Raum auszusetzen, wobei die in der Luft oder dem sonstigen Gas innerhalb des umschlossenen Raums enthaltene Feuchtigkeit mit dem Phosphid in der Rezeptur unter Bildung von den umschlossenen Raum durchdringendem Phosphin reagiert.

18. Verfahren zur Erzeugung eines Begasungs- bzw. Desinfektionsgases aus einem Trägergas und Phosphin, umfassend
(a) eine zur Aufnahme mindestens einer abgepackten Rezeptur gemäß Anspruch 14 oder 15 mit dem oder mindestens einem entfernten Verschlußteil ausgesraltete Kammer mit einer Gaseinlaßöffnung und einer Gasauslaßöffnung, wobei die Gaseinlaßöffnung und die Gasauslaßöffnung derart angeordnet sind, daß ein die Kammer von der Einlaßöffnung zu der Auslaßöffnung durchströmendes Gas an der mindestens einen abgepackten Rezeptur vorbeiströmt, und
(b) eine an demr Gaseinlaßöffnung angeschlossene Trägergaszufuhreinrichtung, die für einen Trägerstrom durch die Kammer zur Gasauslaßöffnung sorgt, wobei in dem Trägergas enthaltene Feuchtigkeit mit dem Phosphid in der freigelegten Rezeptur unter Bildung von in das Trägergas einverleibtem Phosphin reagiert.

19. Vorrichtung nach Anspruch 18, in welcher die Trägergaszufuhreinrichtung aus einer Luft, Stickstoff oder Kohlendioxid enthaltenden Druckgasflasche oder aus einer Luftpumpe besteht und wobei die Vorrichtung ein zwischen dem Auslaß aus der Druckgasflasche oder der Luftpumpe und der Gaseinlaßöffnung angebrachtes Wasserbad zum Anfeuchten des Trägergases enthält.

## Revendications

1. Formulation de phosphure destinée à une utilisation dans la production régulée de phosphine, la formulation comprenant un mélange intime de
(a) un phosphure particulaire qui réagit avec l'eau pour former de la phosphine ; et
(b) un composé non miscible avec l'eau qui est inerte vis-à-vis du phosphure, ledit composé non miscible avec l'eau étant choisi dans le groupe constitué par (i) une huile non volatile, (ii) une cire à bas point de fusion, (iii) un mélange d'une huile non volatile et de gelée de pétrole ou d'une cire à bas point de fusion, et (iv) un mélange d'une huile non volatile, de gelée de pétrole et d'une cire à bas point de fusion ;
ledit mélange intime ayant la consistance, à la température d'utilisation du mélange, d'une pâte extrudable ou d'une suspension épaisse ; ledit phosphure particulaire constituant de 65% (en poids) à 85% (en poids) de la formulation.

2. Formulation de phosphure selon la revendication 1, dans laquelle le phosphure particulaire constitue de 70% (en poids) à 75% (en poids) de la formulation.

3. Formulation de phosphure selon la revendication 1 ou la revendication 2, dans laquelle le phosphure particulaire a une granulométrie inférieure à 250 µm.

4. Formulation de phosphure selon l'une quelconque des revendications précédentes, dans laquelle ladite formulation comprend un tensicactif.

5. Formulation de phosphure selon la revendication 4, dans laquelle ledit tensioactif constitue jusqu'à 10% (en poids) de la formulation.

6. Formulation de phosphure selon la revendication 5, dans laquelle le tensicactif est le polyéthylèneglycol.

7. Procédé de production de phosphine de manière régulée, ledit procédé comprenant : l'introduction périodique d'une petite quantité d'une formulation de phosphure, selon l'une quelconque des revendications précédentes, dans un bain d'eau, afin que l'eau dans le bain d'eau sépare progressivement le composé non miscible avec l'eau de la formulation, de façon à ce que les particules de phosphure entrent progressivement en contact avec l'eau du bain d'eau, suite à quoi les particules de phosphure réagissent avec l'eau du bain d'eau pour produire la phosphine.

8. Procédé selon la revendication 7, dans lequel l'eau dans le bain d'eau contient un détergent.

9. Appareil pour la production régulée de phosphine, ledit appareil comprenant :
(a) une chambre réactionnelle adaptée pour contenir de l'eau, ladite chambre réactionnelle ayant une ouverture d'entrée de gaz et une ouverture de sortie de gaz, l'ouverture de sortie de gaz se situant au-dessus du niveau normal de l'eau dans la chambre ;
(b) un récipient adapté pour contenir une formulation de phosphure selon l'une quelconque des revendications 1 à 6, l'intérieur du récipient étant relié à la chambre réactionnelle par l'intermédiaire d'une petite ouverture ou d'une buse ; et
(c) des moyens de transfert de la formulation associés en fonctionnement avec ledit récipient de façon à entraîner le transfert d'une formulation depuis l'intérieur du récipient à une vitesse régulée à travers l'ouverture ou la buse et dans la chambre réactionnelle, où la formulation transférée entre en contact avec l'eau dans la chambre réactionnelle, suite à quoi l'eau dans la chambre réactionnelle sépare progressivement le composé non miscible avec l'eau de la formulation transférée, afin d'exposer progressivement les particules de phosphure dans la formulation transférée à l'eau dans la chambre réactionnelle, qui réagit avec les particules de phosphure pour produire la phosphine.

10. Appareil selon la revendication 9, dans lequel la chambre réactionnelle possède un couvercle, ledit récipient est monté au-dessus de la chambre réactionnelle, et ladite ouverture ou ladite buse est placée dans le couvercle de la chambre réactionnelle.

11. Appareil selon la revendication 9, dans lequel la chambre réactionnelle possède un fond, ledit récipient est monté au-dessous de ladite chambre réactionnelle, l'intérieur dudit récipient est relié à la chambre réactionnelle par l'intermédiaire d'une ouverture dans ledit fond, et ladite ouverture est fermée par une vanne une voie, ladite vanne permettant le transfert de ladite formulation dudit récipient à la chambre réactionnelle.

12. Appareil selon la revendication 11, dans lequel le composé non miscible avec l'eau de ladite formulation comprend une cire à bas point de fusion qui est solide à la température ambiante ; ledit appareil comprenant un premier moyen de chauffage dans ledit sol et un deuxième moyen de chauffage associé en fonctionnement avec ledit récipient, ledit premier moyen de chauffage étant adapté au chauffage de ladite formulation à une température suffisante pour permettre son extrusion à travers ladite vanne ; ledit deuxième moyen de chauffage étant adapté au chauffage de l'eau dans la chambre réactionnelle à une température telle que ladite cire à bas point de fusion ne se solidifie pas lorsque la formulation entre dans la chambre réactionnelle par l'intermédiaire de ladite vanne.

13. Appareil selon l'une quelconque des revendications 9 à 12, dans lequel ledit moyen de transfert de la formulation comprend (i) un piston mobile à l'intérieur dudit récipient, (ii) une pompe péristaltique, ou (iii) un mécanisme d'alimentation à vis.

14. Formulation de phosphure selon l'une quelconque des revendications 1 à 6, ladite formulation étant emballée à l'intérieur d'un récipient imperméable à l'humidité, ledit récipient contenant au moins une ouverture, ladite ouverture ou chaque ouverture étant fermée par un élément de fermeture imperméable à l'humidité respective, ledit élément de fermeture ou chaque élément de fermeture pouvant être retiré pour exposer la formulation emballée dans le récipient.

15. Formulation de phosphure emballée selon la revendication 14, dans laquelle la formulation est une pâte rigide, disposée à l'intérieur dudit récipient de sorte que la formulation présence au moins une surface convexe lorsque ledit au moins un élément de fermeture est retiré pour exposer la formulation.

16. Procédé de production de phosphine de manière régulée, ledit procédé comprenant les étapes consistant à
(a) placer une formulation emballée selon la revendication 14 ou la revendication 15, dans une région à travers laquelle un gaz peut s'écouler, ledit élément de fermeture ou au moins un élément de fermeture du récipient étant ultérieurement ou antérieurement retiré du récipient ; et
(b) entraîner l'écoulement d'un gaz véhicule contenant de l'humidité à travers ladite région et sur la formulation de phosphure exposée, afin que l'eau dans le gaz véhicule réagisse avec le phosphure dans la formulation pour former de la phosphine, qui est incorporée dans le gaz véhicule.

17. Procédé de production de phosphine à l'intérieur d'une enceinte de fumigation, ledit procédé comprenant le fait de placer une formulation emballée selon la revendication 14 ou la revendication 15 dans l'enceinte, le ou au moins un élément de fermeture étant retiré, afin d'exposer la formulation de phosphure à l'air ou un à autre gaz à l'intérieur de l'enceinte, afin que l'humidité de l'air ou de l'autre gaz à l'intérieur de ladite enceinte réagisse avec le phosphure dans la formulation pour former de la phosphine, qui s'échappe de l'enceinte.

18. Appareil de production d'un gaz de fumigation comprenant un gaz véhicule et de la phosphine, ledit appareil comprenant :
(a) une chambre adaptée pour contenir au moins une formulation emballée selon la revendication 14 ou la revendication 15, le ou au moins un élément de fermeture étant retiré, ladite chambre ayant une ouverture d'entrée de gaz et une ouverture de sortie de gaz, ladite ouverture d'entrée de gaz et ladite ouverture de sortie de gaz étant placées de sorte qu'un gaz s'écoulant à travers ladite chambre depuis ladite ouverture d'entrée jusqu'à ladite ouverture de sortie s'écoule sur ladite au moins une formulation emballée ; et
(b) un moyen d'alimentation en gaz véhicule relié à ladite ouverture d'entrée de gaz pour fournir un courant de gaz véhicule à travers ladite chambre jusqu'à ladite ouverture de sortie de gaz, afin que l'humidité dans ledit gaz véhicule réagisse avec le phosphure dans la formulation exposée afin de produire de la phosphine, qui est incorporée audit gaz véhicule.

19. Appareil selon la revendication 18, dans lequel ledit moyen d'alimentation de gaz véhicule est un cylindre contenant de l'air, de l'azote ou du dioxyde de carbone, ou est une pompe à air, et ledit appareil comprend un bain d'eau inséré entre la sortie dudit cylindre ou ladite pompe à air et ladite ouverture d'entrée de gaz, pour humidifier le gaz véhicule.
